# EUROPÄISCHE PATENTSCHRIFT

(11) **EP 3 678 808 B1**
(45) Veröffentlichungstag und Bekanntmachung des Hinweises auf die Patenterteilung: **28.06.2023**
(21) Anmeldenummer: 18778377.4
(22) Anmeldetag: 07.09.2018
(51) Int. Cl.: B23K 20/02

(54) **VERFAHREN ZUR VERBINDUNG VON WERKSTÜCKEN MITTELS DIFFUSIONSSCHWEISSENS**
PROCESS FOR CONNECTING WORKPIECES USING DIFFUSION BONDING
PROCÉDÉ D'ASSEMBLAGE DE PIÈCES PAR SOUDAGE PAR DIFFUSION

(30) Priorität: 08.09.2017 DE 102017120815
(43) Veröffentlichungstag der Anmeldung: 15.07.2020
(73) Patentinhaber: Karlsruher Institut für Technologie, 76131 Karlsruhe (DE)
(72) Erfinder: GIETZELT, Thomas, 76137 Karlsruhe (DE); HÜLL, Andreas, 76870 Kandel (DE); TOTH, Volker, 76297 Stutensee (DE)
(74) Vertreter: Fitzner, Uwe
(86) Internationale Anmeldenummer: PCT/EP2018/074203
(87) Internationale Veröffentlichungsnummer: WO 2019/048641

(56) Entgegenhaltungen:
- EP-A2- 2 957 376
- DE-A1-102012 109 782

## Beschreibung

Die vorliegende Erfindung betrifft ein Verfahren zur Verbindung von Werkstücken mittels Diffusionsschweißen.

Aus dem Stand der Technik sind verschiedene Verfahren für eine verbesserte Verbindungsbildung zwischen Fügepartnern bekannt. Z.B. bestehen solche Verfahren darin, Beschichtungen oder Zwischenlagen aufzubringen. Grundsätzlich können hierbei zwei Wirkweisen unterschieden werden:
1. Die Bildung einer niedrig schmelzenden Zone in der Fügeebene durch eutektische Legierungszusammensetzungen. Da der Diffusionskoeffizient in Flüssigkeiten mehrere Größenordnungen höher als in Festkörpern ist, erfolgt die Ausbildung einer stoffschlüssigen Verbindung erheblich schneller. Aufgrund der Diffusion gleichen sich während des Diffusionsschweißprozesses Unterschiede in der chemischen Zusammensetzung soweit aus, dass nach abgeschlossener Verschweißung, im Unterschied zu Lötungen, von einem einphasigen Werkstoff gesprochen werden muss.
2. Die Verwendung sog. Nanofoils ist ebenfalls aus dem Stand der Technik bekannt. Dabei werden Nanokristalline, amorphe oder Multilagenschichten verschiedener Werkstoffe als Schichten abgeschieden. Aufgrund metastabiler Zustände (Nanokristalline oder amorphe Schichten) bzw. extrem erhöhter grenzflächiger Energie(Multilagenschichten) reicht u.U. eine geringe Aktivierungsenergie aus, damit das System den thermodynamischen Gleichgewichtszustand (kristalliner Aufbau, Verringerung der Grenzflächenenergie in Multilagenschichten durch Ausgleich der Konzentrationsunterschiede durch Diffusion) anstrebt. Im Extremfall erfolgt in Sekundenbruchteilen eine extreme Temperaturerhöhung. Die Wärmeleitung erfolgt zeitlich verzögert bzw. begrenzt, sodass die Bildung einer flüssigen Phase, welche die Ausbildung einer stoffschlüssigen Verbindung unterstützt, möglich wird. Auch hier ist nach Abschluss des Prozesses von einem einphasigen Werkstoff auszugehen.

Die beschriebenen Lösungen erfordern einen zusätzlichen Beschichtungsschritt oder entsprechende Nanofoils sowie deren Zuschnitt. Der zeitliche Einfluss auf das Fügeergebnis aufgrund der zwischenzeitlichen Änderungen der Schichten kann nachteilig sein. Zudem stellen die Maßnahmen einen zusätzlichen Aufwand sowie Kosten dar.

Aus der DE 40 303 89 C1 ist bereits ein Schichtenverbund bekannt, wobei ein Rohrmaterial eines Metallrohres eine Mehrzahl von Lagenfolie aus Refraktärmetall aufweist und zumindest zwei Lagen Folie aus Refraktärmetall zumindest bereichsweise stoffschlüssig miteinander verbunden sind. Dabei werden durch die Metallfolien bzw. Metalllagen eine rohrförmige Wicklung gebildet und anschließend mindestens die zwei innersten oder die zwei äußersten Lagen der Wicklung explosiv miteinander verbunden. Dieses Verfahren der Herstellung ist nur für dünne Laminate geeignet und stelle keine Lösung für Laminate mit 20 oder mehr Lagen dar. Es handelt sich nicht um ein Diffusionsverfahren, sondern um ein Explosionsverfahren.

Aus der DE 10 2012 109 782 A1 ist ein Verfahren zur Herstellung eines Schichtenverbundes aus Metallen und/oder Metalllegierungen bekannt. Hierzu werden die einzelnen Lagen der Metalle abwechselnd aufeinander geschichtet und mittels uni-axialem Diffusionsschweißen miteinander stoffschlüssig verbunden. Der Druck schwankt bei diesem Verfahren zyklisch. Das Diffusionsverfahren wird im Vakuum-Ofen bei einer Temperatur von 590 - 780°C und einem Druck von 50-300 MPa und einer zyklisch wiederholenden Erhöhung des Drucks bis zu 300 % und einer Haltezeit von 2-20 Stunden durchgeführt. Die Dauer eines Zyklus mit erhöhtem Druck ist im Verhältnis zur Gesamtdauer des Diffusionszyklus bei etwa 1/20-1/30. Als weiterer Stand der Technik können EP 2 957 376 A2, welche die Basis für den Oberbegriff des Anspruchs 1 bildet, und DE 10 2012 109 782 A1 genannt werden.

Die vorliegende Erfindung hat sich nunmehr die Aufgabe gestellt, Schichtstoffverbunde aus artgleichen Werkstoffen, bei denen Konzentrationsunterschiede keine Triebkraft für die Diffusion darstellen, herzustellen.

Gegenstand der Erfindung ist demzufolge ein Verfahren zur Verbindung von Werkstücken aus artgleichen Werkstoff oder enthaltend artgleiche Werkstoffe mittels eines Diffusionsverfahrens, bei welchem für eine kurze Zeitdauer der Druck zyklisch derart erhöht wird, so dass ein plastisches Fließen erzielt wird, wobei die Zeitdauer der Erhöhung der Flächenpressung im Verhältnis zur Gesamtdauer des Verfahrens zwischen 1/40 und 1/300 liegt, wobei die Werte für die Erhöhung der Flächenpressung nach und nach in jedem Zyklus erhöht werden.

Die Lösung des erfindungsgemäßen Problems besteht demgemäß in einer kurzzeitigen, spitzenartigen Erhöhung der Flächenpressung. Anschließend wird die Flächenpressung wieder auf einen Wert abgesenkt, bei dem über die Zeit kein messbares Werkstofffließen auftritt.

Grundsätzlich wird über die Gesamtdauer des Fügeprozesses eine Flächenpressung aufgebracht, bei dem die Bauteile nicht verformen und die Werkstoffe nicht messbar fließen. Vorzugsweise in zyklischen Abständen von 0,1 bis 1 Stunde wird die Flächenpressung kurzzeitig in einem Bereich angehoben, bei dem plastische Verformung über die Zeit auftritt. Währenddessen erfolgt eine Ausweitung der Kontaktzone. Diese erhöhte Flächenpressung liegt vorzugsweise im Bereich von 1/40 bis 1/300 der Gesamtfügedauer. Nach der Absenkung der Flächenpressung auf das vorherige Niveau erfolgt die Ausweitung der Kontaktzone aufgrund der Diffusion über einen erheblich längeren Zeitraum. Da sich mit zunehmender Verfahrensdauer und steigender Anzahl der kurzzeitigen Spitzenbelastungen, bei denen eine messbare plastische Verformung über die Zeit auftritt, die tatsächliche Kontaktzone ausweitet, wird die Höhe der aufeinanderfolgenden Spitzenbelastungen vorzugsweise jeweils moderat gesteigert.

Nach der Erfindung wird das Diffusionsschweißen bei einer Flächenpressung durchgeführt, die nahezu drucklos ist. Vorzugsweise wird die Flächenpressung so ausgewählt, dass über den überwiegenden Zeitraum des Fügeprozesses keine messbare Deformation auftritt. Während der Zeit der Diffusionsschweißung liegt eine Flächenpressung somit an, bei der keine Deformation auftritt.

Die Erhöhung der Flächenpressung erfolgt erfindungsgemäß zyklisch. In einer besonders bevorzugten Ausführungsform erfolgt die Erhöhung der Flächenpressung in gleichmäßigen Abständen. Hierbei ist wiederum ein Abstand von einer halben Stunde bis eineinhalb Stunden zwischen den Zyklen der Erhöhung der Flächenpressung bevorzugt. Besonders bevorzugt ist ein stündlicher Abstand. Die Zahl der Zyklen für die Erhöhung der Flächenpressung liegt zwischen 2 und 16, vorzugsweise bei 4.

Die Dauer der erhöhten Flächenpressung ist im Verhältnis zur Gesamtdauer des Diffusionsprozesses bei 1/40 bis 1/300, vorzugsweise 1/45 zu 1/250.

Die Zeitdauer der erhöhten Flächenpressung liegt erfindungsgemäß bei 1 - 8 Minuten. Bevorzugt sind 1 - 5 Minuten, besonders bevorzugt 1 Minute.

Vorzugsweise werden 1 - 5 Minuten, besonders bevorzugt 1 - 3 Minuten für die Zeit zum Erreichen der Spitzenbelastung verwendet. Anschließend wird die Flächenpressung bei den angegebenen Werten gehalten. Die Entlastungszeit entspricht wieder 1 - 5 Minuten, besonders bevorzugt 1 - 3 Minuten.

Die spitzenartige Anhebung der Flächenberechnung dauert insgesamt 3 Minuten innerhalb einer Stunde. Mit anderen Worten: 1 Minute für das Anfahren der hohen Last, 1 Minute Halten der hohen Last und 1 Minute Abfahren auf den Wert der niedrigen Flächenpressung. D.h. für 57 Minuten liegt also die konstant niedrigere Flächenpressung an. Wahlweise erfolgt eine spitzenartige Belastung pro Stunde, je nach Material einmal pro halbe Stunde bis einmal pro 2 Stunden.

Die Dauer des Diffusionsverfahrens kann erfindungsgemäß zwischen 2 und 16 Stunden liegen. Bevorzugt ist eine Dauer von 2 - 8 Stunden, besonders bevorzugt 2 - 6 Stunden. Während dieser Zeit werden erfindungsgemäß wiederholte Erhöhungen der Flächenpressung vorgenommen. Hierbei ist bevorzugt eine Wiederholung einmal pro Stunde. Die Werte für einen Zyklus mit erhöhter Flächenpressung hängen von dem zu fügenden Werkstoff sowie von der Fügetemperatur in Relation zum Beginn des Temperaturbereiches, in dem die Legierung schmilzt, ab. Unter Flächenpressung ist erfindungsgemäß der Druck bzw. die Krafteinheit pro Flächeneinheit zu verstehen, z.B. N/mm². Vorzugsweise liegt der Wert für die Flächenpressung zwischen 5 und 24 MPa. Bevorzugt sind 8 - 18 MPa, besonders bevorzugt 15 - 18 MPa.

Die Flächenpressung eines jeden Zyklus ist in jedem Zyklus gegenüber dem vorhergehenden Zyklus erhöht. Für die Steigerung der Flächenpressung ist es beispielsweise möglich, Werte zwischen 8 - 12 MPa für den ersten Schritt, 15 - 18 MPa und 25 MPa für den letzten Schritt zu wählen. Im Einzelnen hängen diese Werte von der jeweils gewählten Fügetemperatur ab.

Die Wahl der Temperatur ist materialabhängig. Generell liegen die Temperaturen zwischen 800 und 1.300°C. Für verschiedene rostfreie Stähle liegt beispielsweise die Temperatur zwischen 1.050 und 1.280°C. Dabei steigt die Temperatur abhängig von der Dicke der Passivschichten bzw. der Grundbeständigkeit des Materials.

Erfindungsgemäß können alle schweißbaren Materialien mit dem Verfahren verbunden werden. Bevorzugt ist der Einsatz für Metalle. Zu den bevorzugten Werkstoffen zählen alle Klassen von Stählen, insbesondere rostfreie Edelstähle, welche keine Gitterumwandlung (Polymorphie) im festen Zustand aufweisen und mit Passivschichten behaftet sind. Ebenso kommen Nickelbasislegierungen, Titanlegierungen, Kupferlegierungen in Betracht. Möglich ist auch der Einsatz von Aluminium. Ebenso kommen Werkstoffe mit thermisch stabilen und nicht im Matrixwerkstoff löslichen Passivschichten in Frage. Die erfindungsgemäß verbundenen Werkstoffe kommen in den verschiedensten Bereichen zur Anwendung. Beispiele sind verfahrenstechnische Apparate insbesondere für Hochdruckanwendungen oder Hochtemperaturanwendungen. Angewandt werden können auch Apparate mit plattenförmigem Aufbau. Hierbei hat die Erfindung den Effekt, dass innen liegende, vollflächige Verbindungen erreicht werden können. Mit anderen Worten: Es wird eine vollflächige Verbindung auch innen liegender Strukturen erreicht.

Im Folgenden wird die Erfindung anhand von Beispielen näher beschrieben:

### I Erfindungsgemäße Beispiele 1-3

### Beispiel 1

Für rostfreien austenitischen Edelstahl werden abhängig vom Bauteildesign folgende Fügeparameter vorgeschlagen: Fügetemperatur: 1075°C, Fügedauer: 4 h, konstante Flächenpressung 8-12 MPa, spitzenartige Erhöhung der Flächenpressung wie oben beschrieben von 15, 18, 21 und 24 Mpa.

### Beispiel 2

Für Kupferwerkstoffe: Fügetemperatur: 800°C, Fügedauer: 4 h, konstante Flächenpressung 2-3 MPa, spitzenartige Erhöhung der Flächenpressung wie oben beschrieben vier Mal jede Stunde 4-5 MPa.

### Beispiel 3

Für austenitische Nickelbasislegierungen: Fügetemperatur: 1130°C, Fügedauer: 4 h, konstante Flächenpressung 10-12 MPa, spitzenartige Erhöhung der Flächenpressung wie oben beschrieben vier Mal jede Stunde 15 MPa.

### II Versuchsbeispiele

Im Folgenden wurden folgende Versuche durchgeführt:

### 1. Vergleichsbeispiel:

Es wurde eine Diffusionsschweißung an Hastelloy C-22 (2.4602) durchgeführt (Handelsname für eine Werkstofflegierung, erhältlich über die Firma Haynes INT.)

Das Verfahren wurde unter folgenden Bedingungen ausgeführt:

| | |
|---|---|
| Temperatur: | 1100°C |
| Fügedauer: | 1 h |
| Flächenpressung: | 20 MPa |

Die Flächenpressung war während der Fügezeit konstant.

Trotz hoher Vakuumdichtheit wurde kein Kornwachstum über die Fügeebenen erkennbar erreicht.

### 2. Erfindungsgemäßes Beispiel:

Es wurde gemäß der Erfindung austenitischer Edelstahl 1.4301 einem Diffusionsschweißverfahren unterworfen. Das Verfahren wurde mit folgenden Bedingungen durchgeführt:

| | |
|---|---|
| Temperatur = | 1075°C |
| Fügedauer = | 4 h |
| Flächenpressung = | 10 MPa |

Spitzen für Flächenpressung 15/18/21/24 MPa. (D.h. die Flächenpressung wurde im stündlichen Abstand während der Fügedauer 4 x mit steigenden Drücken durchgeführt).

Im Ergebnis war erkennbar, dass das Kornwachstum über die Fügeebenen der einzelnen Blechlagen sich erstreckte. Mit anderen Worten, es wurde eine vollflächige Verbindung aller Strukturen erreicht.

## Patentansprüche

1. Verfahren zur Verbindung von Werkstücken aus artgleichen Werkstoffen oder enthaltend artgleiche Werkstoffe mittels Diffusionsschweißen, bei welchem für einen kurzen Zeitraum der Druck erhöht wird, sodass plastisches Fließen erreicht wird, **dadurch gekennzeichnet, dass** sich die Erhöhung des Druckes zyklisch wiederholt, dass die Zeitdauer der Erhöhung der Flächenpressung im Verhältnis zur Gesamtdauer des Diffusionsverfahrens zwischen 1/40 und 1/300 liegt, und dass die Werte für die Erhöhung der Flächenpressung nach und nach in jedem Zyklus erhöht werden.

2. Verfahren nach Anspruch 1 **dadurch gekennzeichnet, dass** die Flächenpressung so ausgewählt wird, dass keine messbaren Deformationen erfolgen.

3. Verfahren nach einem der vorhergehenden Ansprüche **dadurch gekennzeichnet, dass** es zwischen 2 und 16 Stunden dauert.

4. Verfahren nach einem der vorhergehenden Ansprüche **dadurch gekennzeichnet, dass** die Zyklen der Erhöhung der Flächenpressung in gleichmäßigen Abständen während des Diffusionsverfahrens durchgeführt werden.

5. Verfahren nach einem der vorhergehenden Ansprüche **dadurch gekennzeichnet, dass** die Zyklen der Erhöhung der Flächenpressung im Abstand von 0,5 - 2 Stunden erfolgen, oder dass die Zyklen der Erhöhung der Flächenpressung im Abstand von einer Stunde erfolgen.

6. Verfahren nach einem der vorhergehenden Ansprüche **dadurch gekennzeichnet, dass** die Zahl der Zyklen zur Erhöhung der Flächenpressung zwischen 2 und 16 liegt.

7. Verfahren nach einem der vorhergehenden Ansprüche **dadurch gekennzeichnet, dass** die Erhöhung der Flächenpressung zwischen 5 und 24 MPa liegt.

8. Verfahren nach einem der vorhergehenden Ansprüche **dadurch gekennzeichnet, dass** die erhöhte Flächenpressung für eine Zeitdauer zwischen 1 und 8 Minuten gehalten wird.

9. Verfahren nach einem der vorhergehenden Ansprüche **dadurch gekennzeichnet, dass** die Zeit bis zum Erreichen der erhöhten Flächenpressung 1 - 5 Minuten beträgt.

10. Verfahren nach einem der vorhergehenden Ansprüche **dadurch gekennzeichnet, dass** der Wert der erhöhten Flächenpressung im ersten Zyklus bei 4 - 12 MPa, im zweiten Zyklus bei 15 - 18 MPa und im dritten Zyklus bei 21 - 24 MPa liegt.

11. Verfahren nach einem der vorhergehenden Ansprüche **dadurch gekennzeichnet, dass** es der Verbindung von Metallen dient.

12. Verfahren nach Anspruch 11 **dadurch gekennzeichnet,**
**dass** als zu verbindende Metalle rostfreie Edelstähle, Nickelbasislegierungen, Titanlegierungen, Kupferlegierungen eingesetzt werden.

## Claims

1. Method for joining workpieces of like materials or containing like materials by diffusion welding, in which the pressure is increased for a short period of time so that plastic flow is achieved, **characterized in that** the increase in pressure is repeated cyclically,
**in that** the duration of the increase in surface pressure in relation to the total duration of the diffusion process is between 1/40 and 1/300,
and **in that** the values for the increase in surface pressure are increased gradually in each cycle.

2. Method according to claim 1, **characterized in that** the surface pressure is selected in such a way that no measurable deformations occur.

3. Method according to any one of the preceding claims, **characterized in that** it takes between 2 and 16 hours.

4. Method according to any one of the preceding claims, **characterized in that** the cycles of increasing the surface pressure are carried out at regular intervals during the diffusion process.

5. Method according to any one of the preceding claims, **characterized in that** the cycles of increasing the surface pressure occur at intervals of 0.5 - 2 hours, or that the cycles of increasing the surface pressure occur at intervals of one hour.

6. Method according to any one of the preceding claims, **characterised in that** the number of cycles for increasing the surface pressure is between 2 and 16.

7. Method according to any one of the preceding claims, **characterized in that** the increase in surface pressure is between 5 and 24 MPa.

8. Method according to any one of the preceding claims, **characterized in that** the increased surface pressure is maintained for a period of time between 1 and 8 minutes.

9. Method according to any one of the preceding claims, **characterized in that** the time until the increased surface pressure is reached is 1 - 5 minutes.

10. Method according to any one of the preceding claims, **characterized in that** the value of the increased surface pressure is 4 - 12 MPa in the first cycle, 15 - 18 MPa in the second cycle and 21 - 24 MPa in the third cycle.

11. Method according to any one of the preceding claims, **characterized in that** it is for joining metals.

12. Method according to claim 11, **characterized in that** stainless steels, nickel-base alloys, titanium alloys, copper alloys are used as metals to be joined.

## Revendications

1. Procédé d'assemblage de pièces, consistant en matériaux de même nature ou contenant des matériaux de même nature, par soudage par diffusion, dans lequel la pression est augmentée pendant une courte période de temps, de manière à obtenir un fluage plastique,
**caractérisé en ce que** l'augmentation de la pression est répétée cycliquement, de sorte que la durée de l'augmentation de la pression superficielle par rapport à la durée totale du procédé de diffusion est comprise entre 1/40 et 1/300, et
**en ce que** les valeurs d'augmentation de la pression superficielle sont augmentées progressivement à chaque cycle.

2. Procédé selon la revendication 1,
**caractérisé en ce que** la pression superficielle est choisie de manière à ce qu'aucune déformation mesurable n'ait lieu.

3. Procédé selon l'une des revendications précédentes,
**caractérisé en ce qu'**il dure entre 2 et 16 heures.

4. Procédé selon l'une des revendications précédentes,
**caractérisé en ce que** les cycles d'augmentation de la pression superficielle sont effectués à intervalles réguliers pendant le procédé de diffusion.

5. Procédé selon l'une des revendications précédentes,
**caractérisé en ce que** les cycles d'augmentation de la pression superficielle sont effectués à des intervalles de 0,5 à 2 heures, ou **en ce que** les cycles d'augmentation de la pression superficielle sont effectués à des intervalles d'une heure.

6. Procédé selon l'une des revendications précédentes,
**caractérisé en ce que** le nombre de cycles d'augmentation de la pression superficielle est compris entre 2 et 16.

7. Procédé selon l'une des revendications précédentes,
**caractérisé en ce que** l'augmentation de la pression superficielle est comprise entre 5 et 24 MPa.

8. Procédé selon l'une des revendications précédentes,
**caractérisé en ce que** la pression superficielle augmentée est maintenue pendant une durée comprise entre 1 et 8 minutes.

9. Procédé selon l'une des revendications précédentes,
**caractérisé en ce que** le temps nécessaire pour atteindre la pression superficielle augmentée est compris entre 1 et 5 minutes.

10. Procédé selon l'une des revendications précédentes,
**caractérisé en ce que** la valeur de la pression superficielle augmentée est de 4 à 12 MPa au premier cycle, de 15 à 18 MPa au deuxième cycle et de 21 à 24 MPa au troisième cycle.

11. Procédé selon l'une des revendications précédentes,
**caractérisé en ce qu'**il sert à assembler des métaux.

12. Procédé selon la revendication 11,
**caractérisé en ce que** les métaux à assembler sont des aciers inoxydables, des alliages à base de nickel, des alliages de titane, des alliages de cuivre.
